Europäisches Patentamt

(19) European Patent Office

Office européen des brevets

(11) Publication number: **0 010 731**
**B1**

## (12) EUROPEAN PATENT SPECIFICATION

(45) Date of publication of patent specification: **22.06.83**  (51) Int. Cl.³: **H 04 L 27/20**

(21) Application number: **79104126.2**

(22) Date of filing: **25.10.79**

(54) Quaternary modulation method for digital data transmission and device for realizing this method.

(30) Priority: **27.10.78 IT 6947178**

(43) Date of publication of application:
**14.05.80 Bulletin 80/10**

(45) Publication of the grant of the patent:
**22.06.83 Bulletin 83/25**

(84) Designated Contracting States:
**DE FR GB**

(56) References cited:
**FR - A - 2 173 642**
**GB - A - 1 136 882**
**US - A - 3 914 695**

(73) Proprietor: **CSELT Centro Studi e Laboratori
Telecomunicazioni S.p.A.
Via Guglielmo Reiss Romoli, 274
I-10148 Turin (IT)**

(72) Inventor: **Porzio Giusto, Pietro
V. Servais 200/e/23
Torino (IT)**

(74) Representative: **Riederer Freiherr von Paar zu
Schönau, Anton et al,
Freyung 615 Postfach 2664
D-8300 Landshut (DE)**

Courier Press, Leamington Spa, England.

# Quaternary modulation method for digital data transmission and device for realizing this method

The invention relates to a quaternary modulation method of digital kind (PSK) in which the signal to be transmitted is divided into a first and a second binary signal train, phase-shifted relative to each other in time by half a symbol period; in which a first component of the carrier can assume and maintain during one symbol period one of two opposite phase states, said first component being phase-modulated in dependence on the symbols of said first binary train; in which a second carrier component can also assume and maintain during one symbol period one of two opposite phase states, said phase states being always in quadrature to those of the first component, said second component being phase-modulated in dependence on the symbols of said second binary train, said first and second carrier components being added together to obtain the quaternary signal, and to a device for realizing the method.

It is well known that a carrier wave modulated in a PSK system is subject to a considerable amplitude modulation as a consequence of the necessary filtering operations that said modulated carrier wave must undergo. Because of this modulation the signal alters in an undesirable manner when it is transmitted over non-linear channels.

In order to limit the extent of this modulation, various solutions have been suggested. These solutions can each be categorized as falling into one of the following four groups:

a) modulation systems, so arranged as to obviate the phase transitions that would cause the greatest maxima of the amplitude modulation (S. A. Rhodes: "Effects of Hard Limiting on Band Limited Transmissions with Conventional and Offset QPSK Modulation", Proc. Nat., Telecom. Conf. (1972), pp. 20F1—20F7; R. K. Kwan: "The effect of filtering and limiting a double-binary PSK signal". IEEE Trans. On Aerospace and Electronic Systems, Vol. AES-5, n. 4, July 1969);

b) systems in which, by means of storage circuits and function generators, an appropriate waveform is associated with each phase transition to be performed (M. K. Simon: "A generalization of Minimum-Shift-Keying (MSK)-type signaling based upon input data symbol pulse shaping", IEEE Trans. Communications, Vol. COM-24, pp. 845—856, August 1976; F. de Jager and C. B. Dekker: "Tamed Frequency Modulation, a novel method to achieve spectrum economy in digital transmission", IEEE Trans. Communications, Vol. COM-26, pp. 534—542, May 1978);

c) systems in which the PSK signal is filtered by means of circuits performing non-linear operations so as to limit the amplitude modulation depth (C. J. Wolejsza: "State of the art of PSK modulation techniques", Colloque Int. sur les Telec. Numeriques par Satellite, Paris 1972);

d) systems in which the amplitude modulation is duly reduced by means of a suitable choice of the time instants at which the carrier-phase transitions are forced (US—A— 3 914 695).

Systems of group a) provide an amplitude modulation which, though reduced, is still very high for transmission over non-linear channels.

Systems of groups b) and c) make it possible to reduce amplitude modulation depth within reasonable limits; however they use complex and expensive circuits, difficult to reproduce and to adjust.

The advantages offered by systems of group d) depend on the ratio of the band of the filters used to limit the signal bandwidth occupation, to the frequency at which the modulation is effected; therefore the field of application of the aforementioned systems is very limited.

The invention is to solve the problem of providing for a low spurious amplitude modulation, by simple means in a manner easy to reproduce and with characteristics independent of the carrier frequency.

Starting out from modulation systems catagorized in group a) and known from the literature relating to group a), this problem is solved by the invention which is characterized in that said first component is amplitude-modulated in dependence on the sequence of symbols of said second binary train, and said second component is amplitude-modulated in dependence on the sequence of the symbols of said first binary train.

The present invention applies to a Quaternary Phase Shift Keying system that corresponds to the sum of two bi-phase carriers duly phase-shifted and is adapted to the transmission of digital data previously subdivided into two binary signal trains, and also relates to a device in which the spurious amplitude modulation is compensated for, at least in part, by altering the amplitude of that component of the quaternary phase carrier which does not change its state in correspondence with the phase transitions of the modulated signal. The characteristics of said alterations, more particularly their amplitude, can be chosen so as to match the characteristics of the modulated signal to the characteristics of the communication channel over which it is sent, and thus can be tailored to the communication channel in order to optimize performance and trade off between quality and interferences. Moreover, the information signal can be recovered by the same demodulation and decision circuits which are usually adopted in the

2

case of the conventional Quaternary Phase Shift Keying system.

Amplitude modulating a PSK signal in dependence of its sequence of symbols is known per se (FR—A—2 173 642, DE—C—2 153 376), wherein some intersymbol-interference components resulting from the communication channel are compensated by a pre-distortion of the original binary signal which pre-distortion results in sending on the line a four-levels signal in place of the original two-levels signal. Even two components in phase quadrature may be each modulated by a sequence of binary symbols. Such technique, however, can not help to limit the amplitude modulation taking place in consequence of the necessary filter operations. Thus, it does not invite the person skilled in the art to derive therefrom the solution of the invention.

These and other characteristics of the present invention will become clearer from the following description of two preferred ways of embodiment thereof, given by way of example and not in a limiting sense, with reference to the accompanying drawings, in which:

Figure 1 is a vector diagram of a quaternary PSK signal, obtained by adding two biphase-signals in quadrature;

Figure 2 is a block diagram of a first particular embodiment of the modulation method, object of the present invention, based on the amplitude alteration of the modulating waveforms;

Figure 3 is an example of waveforms of signals related to the diagram of Figure 2;

Figure 4 is a block diagram of a second particular embodiment of the modulation method, object of the present invention, based on the amplitude alteration of the components forming the modulated carrier.

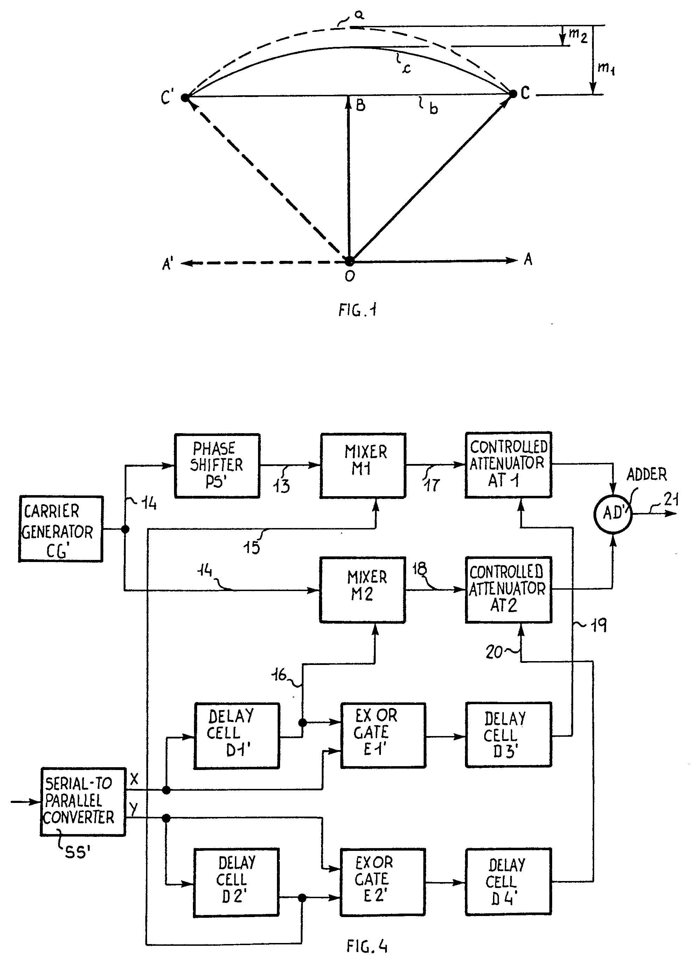

Figure 1 schematically represents the principle on which the invention relies.

Here, the quaternary modulated PSK signal, is represented by vector $\overrightarrow{OC}$, which is obtained by vectorially adding two components in quadrature to each other, represented by vectors $\overrightarrow{OA}$ and $\overrightarrow{OB}$. The two components are modulated by two different independent binary signal trains, each of them being associated with a step waveform.

The signalling intervals of the two binary signal trains, which modulate the two components of the quaternary carrier, are phase-shifted one with respect to the other by a time period equal to half the symbol period.

This phase shift prevents the two components from changing their states simultaneously so that the resulting carrier can only have phase transitions of ±90°.

Let assume, for instance, a phase transition of +90° of the carrier represented by vector $\overrightarrow{OC}$ which, owing to the sign inversion of the component $\overrightarrow{OA}$ from A to A', rotates from location $\overrightarrow{OC}$ to location $\overrightarrow{OC'}$.

In case the principle of this invention was not applied, the trajectory along which the end of vector $\overrightarrow{OC}$ can move, in the transition from C to C', would only depend on the characteristics of the portion of transmission channel that is located prior to the observation point to which the vectorial diagram of Figure 1 is referred and on the phase of the carrier in correspondence with which the phase jump itself has been forced.

Therefore it is impossible to predict what trajectory will be described by end C of vector $\overrightarrow{OC}$.

By way of example it can be supposed that, in case the principle of this invention was not applied, said transition might take place along the segment of straight line CC' including point B, that is, it might cover trajectory b.

The principle on which the present invention relies consists in duly incrementing or decrementing, in correspondence with the phase transition of the carrier, the amplitude of the component which does not change its state; on the contrary when neither component changes its state, and therefore no phase transition occurs, no amplitude alteration takes place.

In the case of phase transition +90°, shown in Figure 1, said principle is realized by altering, in the particular case of positive increment, the amplitude of the component $\overrightarrow{OB}$ which does not change its state.

Due to said alteration, the trajectory covered by end C of vector $\overrightarrow{OC}$ is, for instance, trajectory c instead of b.

The shape of trajectory c depends on the actual shape of the trajectory in case the principle upon which this invention relies was not applied (in the example of Figure 1, trajectory b) and obviously on the degree of alteration produced on the component that does not change its state; the degree of said alteration is determined so as to optimize the communication channel performance.

In a solution of the adaptive kind, it will be sufficient to simulate the communication channel response and utilize in real time the results in order to choose the degree of said alteration; but in the most general cases said alteration can be determined once for all while planning the design.

Hereinafter, to simplify the description, only the case will be considered in which the degree of said alteration is predetermined and kept equal for all phase transitions of the carrier.

In the example depicted in Figure 1 the alteration of the amplitude of component $\overrightarrow{OB}$ has been assumed to be such as to reduce the spurious amplitude modulation associated with phase transition, by making end C follow trajectory c.

In fact, if phase transition were to occur without the modulated signal being affected by spurious amplitude modulation, end C of the vector representing said signal would cover an arc of circumference (dashed curve a) in its transition from C to C'.

The changes of amplitude connected to other trajectories can be measured with respect to said circumference arc along the half-lines outgoing from 0.

As shown in the drawing, the maximum $(m_1)$ amplitude shift of trajectory b with respect to trajectory a is greater than the maximum $(m_2)$ amplitude shift of trajectory c with respect to circular trajectory a.

It is now worth noting that the improvement in the performance relating to the communication channel, generally, is not connected to the decreasing of the maximum of spurious amplitude modulation.

For instance, if in the channel non-linear elements were present the application of the present principle could be oriented to obtain minimum degradation due to non-linearity effects.

In some particular cases, the inventor has even found it convenient to predetermine a reduction in the amplitude of the component that does not change its state, in correspondence with phase transitions in quaternary carrier.

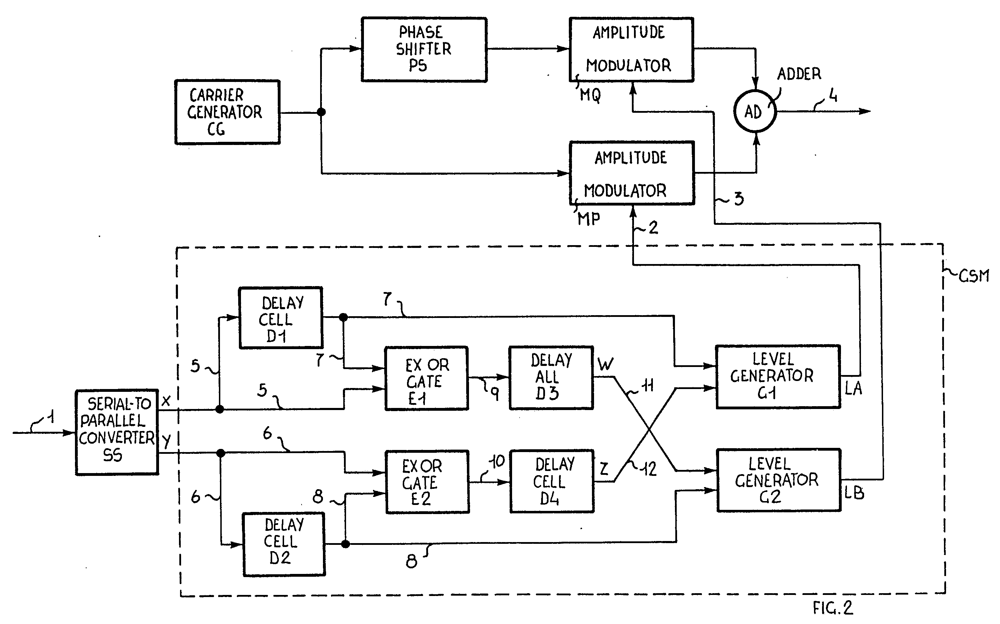

Figure 2 is referred to a particular example of application of the present invention, in which the amplitude of base-band modulating signals is modified, i.e. the amplitude of the two signals modulating the two biphase carriers composing the quaternary signal.

In Figure 2 reference GSM denotes the particular circuit that realizes the present invention; said circuit is able to receive at the input two binary signal trains having the signalling interval phase-shifted relative to each other by half signalling period T, and able also to emit at the output two waveforms, each one having four levels, utilized to amplitude-modulate the two components in quadrature of the quaternary signal.

The blocks forming GSM as well as their functions will be described in details hereinafter.

SS denotes a normal encoding circuit able to serially receive, at the input connected to wire 1, the binary digits of the information to the transmitted and convert them into two binary signal trains having the signalling period T equal to twice the signalling period of the input sequence; said trains, which are phase-shifted with respect to each other by half their signalling period T, are separately emitted at the output over wires 5 and 6.

Reference CG denotes a usual generator of carrier wave; reference PS denotes a usual circuit able to introduce a phase delay of 90° between the signal emitted at the output and the one received at the input; references MQ and MP denote two usual amplitude modulators; reference AD denotes a normal adder circuit.

The network composed of blocks CG, PS, MQ, MP and AD is a structure well known in the technique as being able to generate and modulate a quaternary carrier.

More particularly, said structure receives from wires 2 and 3 the signals modulating the amplitude of the components of the quaternary modulated carrier, having respectively a lead of 45° and a lag of 45° with respect to non-modulated carrier. The modulated carrier is emitted at the output over wire 4.

In order to allow better understanding of the structure and operation of block GSM, the description of the operating theoretical principle is now anticipated.

Let references $\pm L1$, and $\pm L2$ denote the levels utilized to define levels LA and LB of the modulating signals present on wires 2 and 3, respectively; let X and Y be the logic levels of the signals present respectively on wires 5 and 6; let it be assumed as time reference, the central instant (t=0) of the signalling interval during which level LA is maintained on wire 2; let references $X_0$, $X_{-1}$ denote the logic levels present on wire 5 respectively at the time instants t=0 and t=−T and analogously let references $Y_{-1/2}$, $Y_{-3/2}$ denote the logic levels present on wire 6, respectively at time intervals t=−T/2 and t=−3/2T.

The level LA of the signal present on wire 2 is determined as follows: the value of a logic variable Z is calculated by means of the expression

$$Z=Y_{-1/2} \cdot \overline{Y}_{-3/2}+\overline{Y}_{-1/2} \cdot Y_{-3/2} \qquad (1)$$

and LA is given the level defined by the following table:

| $X_{-1}$ | Z | LA |
|---|---|---|
| 0 | 0 | −L1 |
| 0 | 1 | −L2 |
| 1 | 1 | +L2 |
| 1 | 0 | +L1 |

TABLE I

Level LB, that is maintained during the signalling interval beginning at instant t=0, is determined as follows: the value of a logic variable W is computed by means of the expression:

$$W=X_0 \cdot \overline{X}_{-1}+\overline{X}_0 \cdot X_{-1} \qquad (2)$$

and LB is given the level defined by the following table:

| $Y_{-3/2}$ | W | LB |
|---|---|---|
| 0 | 0 | −L1 |
| 0 | 1 | −L2 |
| 1 | 1 | +L2 |
| 1 | 0 | +L1 |

TABLE II

**0010731**

Blocks D1, D2, D3, D4, E1, E2, G1, G2, composing block GSM are now examined in details.

References E1, E2 denote two normal logic gates of exclusive —OR type; references D1 and D2 denote two normal delay cells, able to delay by one signalling period T the binary trains received at the input from wires 5 and 6 respectively; references D3 and D4 are delay cells analogous to D1 and D2, but able to delay the logic values received at their respective inputs by a time equal to half a signalling period (T/2), diminished by the response time ($\Delta 1$) introduced by gates E1, E2.

References G1 and G2 denote two normal level generators each of them able to receive at the input two binary information signals and able also to emit at the output a signal level that can assume one among the four possible values $\pm L1$, $\pm L2$, according to the correspondence established in Tables I and II already examined.

The operation of block GSM will now be investigated.

Binary signals X and Y corresponding to the already defined logic variables $X_0$ and $Y_{-1/2}$ respectively, present on wires 5 and 6 respectively, are delayed by D1 and D2 by one signalling period T and emitted at the output on wires 7 and 8; therefore said signals present on wires 7 and 8 correspond to the previously examined logic variables $X_{-1}$ and $Y_{-3/2}$ respectively.

Gate E1 receives at its two inputs, connected to wires 5 and 7 respectively both the signal of level X and the delayed repetition of the same, and emits at the output on wire 9 a binary signal that, with a lead equal to T/2, assumes the value of logic variable W already defined by the expression (2).

Gate E2 has functions perfectly analogous to gate E1, but as regards the signal Y and its delayed repetition present on wires 6 and 8 respectively; E2 emits at the output on wire 10 a binary signal that, with a time lead equal to T/2 assumes the value of logic variable Z already defined by the expression (1).

Delay cells D3 and D4 receive respectively from wires 9 and 10 the signals outgoing from gates E1 and E2 and emit at the output, respectively on wires 11 and 12, the same signals delayed by T/2; therefore said signals assume the values respectively of logic variables W and Z previously examined.

Level generator G1 receives at the input, connected to wire 7, a binary signal having the value of the logic variable $X_{-1}$, previously examined, and at the input connected to wire 12 a binary signal, having the value of logic variable Z, previously examined, and emits at the output on wire 2 a signal with level LA defined in Table I.

Generator G2 has a perfectly analogous function as to what concerns binary signals $Y_{-3/2}$ and W, received at the inputs connected to wires 8 and 11 respectively, and the signal outgoing on wire 3 of level LB, defined in Table II.

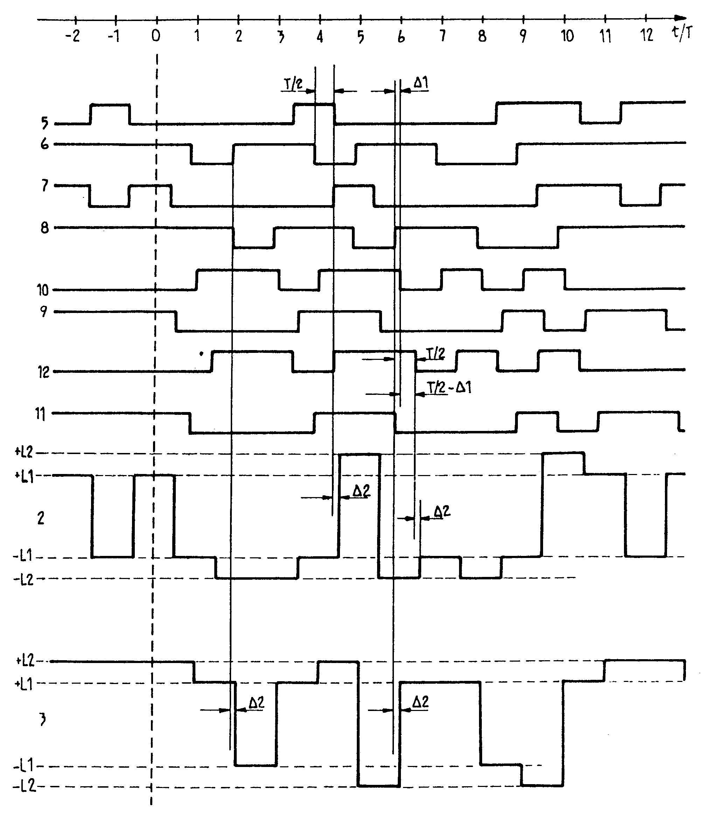

In Figure 3, the waveforms denoted by 2, 3, 5, 6, 7, 8, 9, 10, 11, 12 represent in a particular example of binary signals to be transmitted, just the signals present on the homonymous wires of Figure 2.

The time scale t is normalized with respect to signalling period T and the origin t=0 has been arbitrarily chosen by way of example in correspondence with the central instant of a signalling interval of modulating waveform 2.

Waveforms 5, 6, 7, 8, 9, 10, 11, 12 represent the values of logic variables under the assumption that the high level is associated to logic value *1* and the low level to logic value *0*.

Waveforms 2 and 3 represent levels LA and LB of modulating waveforms present on wires 2 and 3 respectively.

In the particular example of Figure 3 the absolute value of levels $\pm L2$ is higher than the absolute value of levels $\pm L1$ and the ratio between said two absolute values is not given equal to any particular value. Yet generally the absolute value of levels $\pm L2$ can also be less than the absolute value of levels $\pm L1$.

Reference $\Delta 1$ denotes the delay time proper to gates E1 and E2. Such delay time is compensated for, in the example of Figure 3, by a reduced delay introduced by cells D3 and D4 of magnitude exactly equal to $\Delta 1$.

Reference $\Delta 2$ denotes the proper delay time of level generators G1 and G2 that do not require any compensation.

Waveforms 2 and 3 of Figure 3 outline that in correspondence with the sign changes of each one of the two waveforms, the absolute value of the other one is incremented by magnitude L2—L1.

This increment of the absolute value of the amplitude of the modulating waveforms corresponds, after the amplitude modulation process operated by MP and MQ, to an incremented amplitude of the respective components of the quaternary phase-modulated signal, according to the principle disclosed with reference to Figure 1.

In this way by MP and MQ a four-level ($\pm L1$; $\pm L2$) modulation is carried out that gives rise in the two modulated components to two different amplitude levels in addition to a possible sign inversion, that is a two-level amplitude modulation in addition to a two-stages phase modulation.

The same result can be obtained by modulating the two components of the quaternary carrier first in sign and then in amplitude or vice-versa.

The diagram of Figure 4 depicts, more particularly, a type of application in which the two components of the quaternary carrier are modulated first in sign and then in amplitude.

In Figure 4 references CG', PS', SS', D1', D2', D3', D4', E1', E2', AD' denote blocks perfectly identical to the homonymous blocks denoted, with only the apex excepted, in Figure 2.

References M1 and M2 (Figure 4) denote two normal modulators of the sign inversion type able to receive at the input, respectively from wires 13 and 14, periodical waveforms in order to operate the sign inversion on the basis of suitable control signals received from wires 15 and 16 respectively, and to emit said waveforms, possibly inverted, on the respective outputs connected to wires 17 and 18.

References AT1, AT2 denote two normal attenuators apt to receive, from wires 17 and 18 respectively, modulated waveforms and to emit them on the respective outputs, connected to adder AD', at one of the two pre-determined amplitude levels LL1, LL2, in dependence on suitable control signals that AT1 and AT2 receive from wires 19 and 20 respectively.

Blocks SS', D1', D2', D3', D4', E1', E2', are connected to one another exactly as their homonymous blocks denoted, with only the apex excepted, in Figure 2, and obviously carry out the same functions.

Therefore the signals present on wires 16 and 15 of Figure 4 are only those present on wires 7 and 8, respectively, of Figure 2 that have been associated respectively to logic variables $X_{-1}$ (Table I) and $Y_{-3/2}$ (Table II); analogously the signals present on wires 19 and 20 (Figure 4) correspond to the logic variables W (Table II) and Z (Table I), respectively.

The principle on which the particular diagram of Figure 4 relies depends on the consideration that the logic variables $X_{-1}$ and $Y_{-3/2}$ are in relationship, as clearly results from Tables I and II, respectively with the sign of the component directly coming from CG', having a phase lead of 45° with respect to non-modulated carrier, and with the sign of the component coming from PS', having a phase-lag of 45° with respect to non-modulated carrier.

In fact, when $X_{-1}$ (Table I) assumes logic value 0, level LA of the signal that modulates the phase-lead component is negative; whereas when $X_{-1}$ assumes value 1, level LA is positive.

Analogously, when $Y_{-3/2}$ (Table II) assumes logic value 0, level LB of the signal modulating the phase-lag component is negative; whereas when $Y_{-3/2}$ assumes logic value 1, level LB is positive.

From these considerations it results that the signals present on wires 15 and 16 represent the sign that modulators M1 and M2 must impose to the respective components of the carrier in order to carry out the sign modulation.

Analogously the signals present on wires 19 and 20 represent a level that the components of the quaternary modulated signal can assume between the two possible levels: LL1, LL2; LL1 being for instance associated to the presence of a signal corresponding to logic value 1 and LL2 to the presence of a signal corresponding to logic value 0. That is the same as saying that, owing to the operation of blocks D2' and E2', for the phase-lead component the amplitude level LL1 is associated to the occurrence of a variation of the logic value of Y during the passage from one symbol to the next and the amplitude level LL2 is associated to the permanence of the logic value of Y during the passage from one symbol to the next.

Analogously, for the phase-lag component the amplitude level LL1 is associated to the occurrence of a variation of the logic value of X during the passage from one symbol to the next and the amplitude level LL2 is associated to the permanence of the logic value of X during the passage from one symbol to the next.

This interpretation of the amplitude level association of the two components to the variations and permanences of the logic values of variables X and Y can obviously be also referred to the particular example of embodiment depicted in Figure 2, according to what mentioned in reference to Figure 3.

It is now to be specified that the levels connected to the amplitude modulation (assumed thus far for simplicity in number of two: LL1, LL2) can be of whatever number in function of the desired precision in correcting the spurious amplitude modulation, that occurs in relationship with the characteristics of the communication channel.

The extension entailing multilevel amplitude modulation is not anyway a problem to the skilled in the art.

In our example, it will be enough to replace blocks D1, E1, D3 (Figure 2) and blocks D2, E2, E4 by two digital filters of any known type, able to generate at the output multilevel signals depending on the digital signals received at the input.

Analogously in the scheme of Figure 4 it will be sufficient to replace blocks D1', E1', D3' and blocks D2', E2', D4' by filters of the same kind.

**Claims**

1. Quaternary modulation method of digital kind (PSK) in which the signal to be transmitted is divided into a first and a second binary signal train, phase-shifted relative to each other in time by half a symbol period; in which a first component of the carrier can assume and maintain during one symbol period one of two opposite phase states, said first component being phase-modulated in dependence on the symbols of said first binary train; in which a second carrier component can also assume and maintain during one symbol period one of two opposite phase states, said phase states being always in quadrature to those of the first component, said second component being phase-modulated in dependence on the symbols of said second binary train, said first and second carrier components being added together to obtain the quaternary signal; said method being characterized in that said first component is amplitude-modulated in dependence on the sequence of symbols of said second binary train, and said second component is amplitude-modulated in dependence on the sequence of the symbols of said first binary train.

2. Quaternary modulation method of digital kind (PSK) according to claim 1, characterized in that said phase and amplitude modulation of each one of said first and second components of the quaternary carrier are simultaneously carried out in correspondence with the symbol periods of said first and second binary signal trains.

3. Quaternary modulation method of digital kind (PSK) according to claim 1, characterized in that said amplitude modulation of each one of said first and second components of the quaternary carrier is carried out independently of and separately from the effectuation of said phase modulation of each one of said first and second components.

4. Quaternary modulation method of digital kind (PSK) according to claim 1, characterized in that for said amplitude modulation carried out on said first component, a first (LL1) and a second (LL2) amplitude level are provided, the first (LL1) being associated with the occurrence of a logic level variation between one symbol and the next of said second binary signal train; the second (LL2) being associated with the permanence of logic level between one symbol and the next of said second binary signal train.

5. Quaternary modulation method of digital kind (PSK) according to claim 1, characterized in that, for said amplitude modulation carried out on said second component, a first (LL1) and a second (LL2) amplitude level are provided, the first level (LL1) being associated with the occurrence of a logic level variation between one symbol and the next of said first binary signal train; the second (LL2) being associated with the permanence of logic level between one symbol and the next of said first binary signal train.

6. Device for realizing the method according to either claim 1 or 2 or, to claims 4 and 5 characterized in that to carry out said simultaneous amplitude and phase modulations on said first and second components the following means are provided:

— a first delay cell (D1) able to delay by one symbol period (T) said first binary signal train;
— a second delay cell (D2) able to delay by one symbol period (T) said second binary signal train;
— a first logic gate (E2) of exclusive-OR type and a third delay cell (D4), connected in cascade and able to cooperate with said second delay cell (D2) to give rise, at the output of said third cell (D4), to a signal (Z) having a logic value associated with the variations or the permanence of logic values in said sequence of symbols of said second binary signal train;
— a first level generator (G1) able to receive at the input said first binary signal train delayed by said first cell (D1) and said signal (Z) present at the output of said third cell (D4) and to generate at the output a four-level signal ($\pm$L1, $\pm$L2) apt to drive an amplitude modulator (MP) relative to said first component,
— a second logic gate (E1) of exclusive-OR type and a fourth delay cell (D3) connected in cascade and able to cooperate with said first delay cell (D1) to give rise, at the output of said fourth cell (D3), to a signal (W) having a logic value associated with the variations or the permanences of logic value in said sequence of symbols of said first binary signal train;
— a second level generator (G2) able to receive at the input said second binary signal train delayed by said second cell (D2) and said signal (W) present at the output of said fourth cell (D3) and to generate at the output a four-level signal ($\pm$L1, $\pm$L2) apt to drive an amplitude modulator (MQ) relative to said second component.

7. Device for realizing said process according to either claim 1 or 3 or, to claims 4 and 5, characterized in that to effectuate on said first and second components amplitude and phase modulations independently and separately the following means are provided:

— a fifth delay cell (D1') able to delay by a symbol period (T) said first binary signal train and to generate at the output a signal able to drive a phase-modulator (M2) relating to said first component;
— a sixth delay cell (D2') able to delay by a symbol period (T) said second binary signal train and to generate at the output a signal able to drive a phase-modulator (M1) relating to said second component;
— a third logic gate (E2') of exclusive-OR type and a seventh delay cell (D4') connected in cascade and able to co-operate with said sixth delay cell (D2') in order to generate a signal having a logic value associated with the variations or the permanence cf logic values in said sequence of symbols of said second binary signal train and able to drive an amplitude modulator (AT2) relative to said first component;
— a fourth logic gate (E1') of exclusive-OR type and an eighth delay cell (D3'), connected in cascade and able to operate in conjunction with said fifth delay cell (D1') in order to generate a signal having a logic value associated with the variations or the permanence of logic values in said sequence of symbols of said first binary signal train and able to drive an amplitude modulator (AT1) relative to said second component.

## Revendications

1. Procédé de modulation quadriphasée de type numérique (PSK) suivant lequel un signal numérique à transmettre est subdivisé en une première et en une seconde séquence de signaux binaires déphasés entre eux dans le temps d'une demi-période de symbole; suivant lequel un premier composant de porteuse est à même de prendre et maintenir pendant une pèriode de symbole l'un d'entre deux ètats de phases opposés, ce premier composant étant modulé en phase selon le symboles de cette première séquence binaire; suivant lequel un second composant de porteuse est lui aussi en mesure de prendre et maintenier pedant une période de symbole l'un d'entre deux états de phase opposés, ces états de phase étant toujours en quadrature avec ceux de premier composant, ce second composant étant modulé en phase suivant les symboles de cette seconde séquence binaire; ces premier et second composants de porteuse étant additionnés à composer un signal quadriphase; ce procédé étant caractérisé en ce que ce premier composant est modulé en amplitude suivant la succession de symboles de cette seconde séquence binaire et en ce que ce second composant est modulé en amplitude suivant la succession de symboles de cette première séquence binaire.

2. Procédé de modulation quadriphasée de type numérique (PSK), selon la revendication 1, caractérisé en ce que cette modulation de phase et cette modulation d'amplitude de chacun de ces premier et second composants de la porteuse quadriphasée sont effectuées simultanément en correspondance avec les périodes de symbole de ces première et seconds séquence de signaux binaires.

3. Procédé de modulation quadriphasée de type numérique (PSK), selon la revendication 1, caractérisé en ce que cette modulation d'amplitude de chacun de ces premier et second composants de la porteuse quadriphasée est effectuée indépendamment et séparément de l'application de cette modulation de phase de chacun desdits premier et second composants.

4. Procédé de modulation quadriphasée de type numérique (PSK) selon la revendication 1, caractérisé en ce que pour ladite modulation d'amplitude effectuée sur ce premier composant un premier niveau (LL1) et un second (LL2) niveau d'amplitude sont prévus, le premier (LL1) étant associé à l'apparition d'une variation de niveau logique entre un symbole et le suivant de cette seconde séquence de signaux binaires; le second (LL2) étant associé à la permanence d'un niveau logique entre un symbole et le suivant de cette seconde séquence de signaux binaires.

5. Procédé de modulation quadriphasée de type numérique (PSK) selon la revendication 1, charactérisée en ce que pour ladite modulation d'amplitude effectuée sur ce seconde composant un premier niveau (LL1) et un second (LL2) niveau d'amplitude sont prévus, le premier (LL1) étant associé à l'apparition d'une variation de niveau logique entre un symbole et le suivant de cette première séquence de signaux binaires; le second (LL2) étant associé à la permanence d'un niveau logique entre un symbole et le suivant de cette première séquence de signaux binaires.

6. Dispositif pour la réalisation du procédé selon la revendication 1 ou 2, ou les revendications 4 et 5, caractérisé en ce que pour effectuer sur ces premier et second composants ces modulations simultanées d'amplitude et de phase les moyens suivant sont prévus:

— une première cellule de délai (D1) apte à retarder d'une période de symbole (T) cette première séquence de signaux binaires;
— une seconde cellule de délai (D2) apte à retarder d'une période de symbole (T) cette seconde séquence de signaux binaires;
— une première porte logique (E2) du type ou-exclusif et une troisième cellule de délai (D4), connectées en cascade et aptes a coopérer avec cette seconde cellule de délai (D2) pour produire, à la sortie de cette troisième cellule (D4), un signal (Z) ayant un niveau logique associé avec les variations ou permanences de nivaux logiques dans cette séquence de symboles de ladite secondè séquence de signaux binaires;
— un premier générateur de niveau (G1) apte à recevoir à l'entrée cette première séquence de signaux binaires retardée par cette première cellule (D1) et ce signal (Z) présent à la sortie de cette troisième cellule (D4) et à engendrer à la sortie un signal à quatre niveaux ($\pm$L1, $\pm$L2) apte à piloter un modulateur d'amplitude (MP) relatif à ce premier composant;
— une seconde porte logique (E1) de type ou-exclusif et une quatrième cellule de délai (D3) connectées en cascade et aptes à coopérer avec cette première cellule de délai (D1) pour produire, à la sortie de cette quatrième cellule (D3), un signal (W) ayant un niveau logique associé à ces variations ou à ces permanences de niveau logique dans cette séquence de symboles de ladite première séquence de signaux binaires;
— un second générateur de niveaux (G2) apte à recevoir à l'entrée cette seconde sequence de signaux binaires retardée par cette seconde cellule (D2) et ce signal (W) présent à la sortie de cette quatrième cellule (D3) et à produire à la sortie un signal à quatre niveau ($\pm$L1, $\pm$L2) apte à piloter un modulateur d'amplitude (MQ) relatif à ce second composant.

7. Dispositif pour la réalisation du procédé selon la revendication 1 ou 3, ou les revendications 4 et 5, caractérisé en ce que pour effectuer sur ces premier et second composants des modulations d'amplitude et de phase indépendamment et séparément les moyens suivant sont prévus:

— une cinquième cellule de délai (D1') apte à retarder d'une période de symbole (T) cette première séquence de signaux binaires et à produire à la sortie un signal apte à piloter un modulateur de phase (M2), relatif à ce premier composant;

— une sixième cellule de délai (D2') apte à retarder d'une période de symbole (T) cette seconde séquence de signaux binaires et à produire à la sortie un signal apte à piloter un modulateur de phase (M1) relatif à ce seconde composant;

— une troisième porte logique (E2') de type ou-exclusif aussi bien qu'une septième cellule de délai (D4') connectées en cascade et aptes à coopérer avec cette sixième cellule de délai (D2') pour produire un signal ayant un niveau logique associé à ces variations ou à ces permanences de niveau logique dans cette séquence de symbols de ladite seconde séquence de signaux binaires et capable de piloter un modulateur d'amplitude (AT2) relatif à ce premier composant;

— une quatrième porte logique (E1') de type ou-exclusif et une huitième cellule de délai (D3'), connectées en cascade et capables de coopérer avec cette cinquième cellule de délai (D1') pour produire un signal ayant un niveau logique associée à ces variations ou à ces permanences de niveau logique dans cette séquence de symboles de ladite première séquence de signaux binaires et capable de piloter un modulateur d'amplitude (AT1) relatif à ce premier composant.

**Patentansprüche**

1. Verfahren zur quaternären Modulation digitaler Art .(PSK), bei dem man das zu sendende Signal in einen ersten und einen zweiten binären Signalzug aufteilt, die gegeneinander zeitlich um eine halbe Symbolperiode phasenverschoben sind; wobei eine erste Komponente des Trägers, die man in Abhängigkeit von den Symbolen des ersten binären Signalzugs phasenmoduliert, während einer einzelnen Symbolperiode einen von zwei entgegengesetzten Phasenzuständen annehmen und aufrechterhalten kann und eine zweite Komponente des Trägers, die man in Abhängigkeit von den Symbolen des zweiten binären Signalzugs phasenmoduliert, ebenfalls während einer einzigen Symbolperiode einen von zwei entgegengesetzten Phasenzuständen, die stets in Quadratur zu denen der ersten Komponente sind, annehmen und aufrechterhalten kann und man zum Erhalten des quaternären Signals die erste un die zweite Trägerkomponente miteinander addiert, dadurch gekennzeichnet, daß man die erste Komponente in Abhängigkeit von der Folge der Symbole des zweiten binären Signalzugs amplitudenmoduliert und die zweite Komponente in Abhängigkeit von der Folge der Symbole des ersten binären Signalzus amplitudenmoduliert.

2. Verfahren nach Anspruch 1, dadurch gekennzeichnet, daß man die Phasen- und die Amplitudenmodulation jeder Komponente, also der ersten Komponente und der zweiten Komponente, des quaternären Trägers in Übereinstimmung mit den Symbolperioden des ersten und des zweiten binären Signalzugs gleichzeitig durchführt.

3. Verfahren nach Anspruch 1, dadurch gekennzeichnet, daß man die Amplitudenmodulation jeder Komponente, also der ersten Komponente und der zweiten Komponente, des quaternären Trägers unabhängig und getrennt von der Bewirkung der Phasenmodulation jeder dieser Komponenten durchführt.

4. Verfahren nach Anspruch 1, dadurch gekennzeichnet, daß man für die an einer ersten Komponente durchgeführte Amplitudenmodulation einen ersten (LL1) und einen zweiten (LL2) Amplitudenpegel vorsieht, von denen man den ersten Amplitudenpegel (LL1) dem Auftreten einer booleschen Pegeländerung zwischen einem Symbol und dem nächsten des zweiten binären Signalzugs zuordnet und den zweiten Amplitudenpegel (LL2) dem Andauern des booleschen Pegels von einem Symbol zum nächsten des zweiten binären Signalzugs zuordnet.

5. Verfaharen nach Anspruch 1, dadurch gekennzeichnet, daß man für die an der zweiten Komponente durchgeführte Amplitudenmodulation einen ersten (LL1) und einen zweiten (LL2) Amplitudenpegel vorsieht, von denen man den ersten Amplitudenpegel (LL1) dem Auftreten einer booleschen Pegeländerung zwischen einem Symbol und dem nächsten des ersten binären Signalzugs zuordnet und den zweiten Amplitudenpegel (LL2) dem Andauern des booleschen Pegels von einem Symbol zum nächsten des ersten binären Signalzugs zuordnet.

6. Vorrichtung zur Durchführung des Verfahrens nach Anspruch 1 oder 2 oder nach den Ansprüchen 4 oder 5, dadurch gekennzeichnet, daß die folgenden Einrichtungen zur Durchführung der gleichzeitigen Amplituden- und Phasenmodulationen an der ersten und an der zweiten Komponente dienen:

— eine erste Verzögerungszelle (D1), die den ersten Binärsignalzug um eine Symbolperiode (T) verzögert;

— eine zweite Verzögerungszelle (D2), die den zweiten Binärsignalzug um eine Symbolperiode (T) verzögert;

— eine erste Verknüpfungsschaltung (E2) in Form eines Exklusive-ODER-Glieds und eine dritte Verzögerungszelle (D4), die in Kaskade an die zweite Verzögerungszelle (D2) angeschlossen sind und mit ihr so zusammenwirken, daß ausgangsseitig von der dritten Verzögerungszelle (D4) ein Signal (Z) auftritt, dessen boolescher Wert den Änderungen oder dem Andauern der booleschen Pegel in der Folge der Symbole des zweiten Binärsignalzugs zugeordnet ist;

— ein erster Pegelgenerator (G1), der eingangsseitig den von der ersten Verzögerungszelle (D1) verzögerten ersten Binärsignalzug und das ausgangsseitig von der dritten Verzögerungszelle (D4) auftretende Signal (Z) empfängt und an seinem Ausgang ein vierpegeliges Signal ($\pm L1$, $\pm L2$) erzeugt, das einen auf die erste Komponente bezogenen Amplitudenmodulator (MP) treibt;

— eine zweite Verknüpfungsschaltung (E1) in Form eines Exklusiv-ODER-Glieds un eine vierte Verzögerungszelle (D3), die in Kaskade an die erste Verzögerungszelle (D1) angeschlossen sind un mit ihr so zusammenwirken, daß ausgangsseitig von der vierten Verzögerungszelle (D3) ein Signal (W) auftritt, dessen boolescher Pegel den Änderungen oder dem Andauern des booleschen Pegels in der Folge der Symbole des ersten Binärsignalzugs zugeordnet ist;

— ein zweiter Pegelgenerator (G2), der eingangsseitig den von der zweiten Verzögerungszelle (D2) verzögerten zweiten Binärsignalzug und das ausgangsseitig an der vierten Verzögerungszelle (D3) auftretende Signal (W) empfängt und an seinem Ausgang eine vierpegeliges Signal ($\pm L1$, $\pm L2$) erzeugt, das einen auf die zweite Komponente bezogenen Amplitudenmodulator (MQ) treibt.

7. Vorrichtung zur Durchführung des Verfahrens nach Anspruch 1 oder 3, oder nach den Ansprüchen 4 und 5, dadurch gekennzeichnet, daß die folgenden Einrichtungen zum unabhängigen und getrennten Bewirken der Amplituden- und Phasenmodulationen der ersten und der zweiten Komponente dienen:

— eine fünfte Verzögerungszelle (D1'), die den ersten Binärsignalzug um eine Symbolperiode (T) verzögert und als Ausgangssignal ein Signal erzeugt, das einen auf diese erste Komponente bezogenen Phasenmodulator (M2) treibt;

— eine sechste Verzögerungszelle (D2'), die den zweiten Binärsignalzug um eine Symbolperiode (T) verzögert und als Ausgangssignal ein Signal erzeugt, das einen auf die zweite Komponente bezogenen Phasenmodulator (M1) treibt;

— eine dritte Verknüpfungsschaltung (E2') in Form eines Exklusiv-ODER-Glieds und eine siebte Verzögerungszelle (D4'), die in Kaskade an die sechste Verzögerungszelle (D2') angeschlossen sind und mit ihr so zusammenwirken, daß ein Signal erzeugt wird, das einen den Änderungen oder dem Andauern der booleschen Werte in der Folge der Symbole des zweiten Binärsignalzugs zugeordneten booleschen Werte hat und einen auf die erste Komponente bezogenen Amplitudenmodulator (AT2) treibt;

— eine vierte Verknüpfungsschaltung (E1') in Form eines Exklusiv-ODER-Glieds und eine achte Verzögerungszelle (D3'), die in Kaskade an die fünfte Verzögerungszelle (D1') angeschlossen sind und in Verbindung mit ihr so wirken, daß ein Signal erzeugt wird, das einen den Änderungen oder dem Andauern der booleschen Werte in der Folge der Symbole des ersten Binärsignalzugs zugeordneten booleschen Wert hat und einen auf die zweite Komponente bezogenen Amplitudenmodulator (AT1) treibt.

0010731

FIG.1

FIG.4

1

FIG. 2

FIG. 3